# EUROPÄISCHE PATENTSCHRIFT

(11) **EP 2 312 707 B1**
(45) Veröffentlichungstag und Bekanntmachung des Hinweises auf die Patenterteilung: **17.10.2012**
(21) Anmeldenummer: 09010951.3
(22) Anmeldetag: 27.08.2009
(51) Int. Cl.: H02B 1/50

(54) **Stromversorgungseinrichtung sowie Verfahren zum Montieren einer Stromversorgungseinrichtung**
Power supply device and method for assembling same
Dispositif d'alimentation électrique et procédé de montage d'un dispositif d'alimentation électrique

(43) Veröffentlichungstag der Anmeldung: 20.04.2011
(73) Patentinhaber: Jean Müller GmbH Elektrotechnische Fabrik, 65343 Eltville (DE)
(72) Erfinder: Bleuel, Harald, 65375 Oestrich -Winkel (DE); Aldabbag, Ammar, 55411 Bingen am Rhein (DE)
(74) Vertreter: Quermann, Helmut

(56) Entgegenhaltungen:
- DE-A1- 19 620 082
- FR-A1- 2 598 563
- US-A- 3 906 295
- US-A- 5 378 058
- US-A1- 2005 167 135

## Beschreibung

Aus der Praxis ist eine Stromversorgungseinrichtung bekannt sowie ein Verfahren zum Montieren einer Stromversorgungseinrichtung, die die Funktion einer Stromzapfsäule für Elektrofahrzeuge besitzt. Diese weist eine trennbare Anschlussvorrichtung als Stromübergabestelle von einem Stromversorger/öffentlichem Verteilungsnetz auf, die einen Anschlusskasten aufweist, wobei das äußere Gehäuse des Anschlusskastens aus Metall besteht. Über diesen Anschlusskasten ist eine Haube gestülpt, die elektrische Komponenten als Übergabestelle zum Endverbraucher beinhaltet, insbesondere elektrische Verbindungen zum Anschlusskasten, einen Stromzähler und eine Steckdose zum Anschließen eines externen Stromkabels an der Zapfsäule und dem Elektrofahrzeug zum Aufladen dessen elektrischen Speichermediums. Bei dieser Zapfsäule besteht auch die Haube aus Metall.

Aufgrund der beschriebenen Gestaltung ist es erforderlich, die Stromversorgungseinrichtung vollständig zu montieren, womit es nicht möglich ist, zunächst die trennbare Anschlussvorrichtung, insbesondere den abgesicherten Anschlusskasten zu setzen und zu einem unabhängigen, beliebigen Zeitpunkt die Übergabestelle zum Endverbraucher, somit zum Fahrzeugbesitzer zu installieren. Im Übrigen bedingt die Haubenkonstruktion eine unzureichende Belüftung der im abgesicherten Anschlusskasten befindlichen elektrischen Komponenten, mit der Konsequenz, dass insbesondere bei der Wärmebildung im Anschlusskasten beim Betrieb der Versorgungseinrichtung Kondensat gebildet wird und elektronische Bauteile einer erhöhten Störanfälligkeit unterliegen. Dies kann im ungünstigsten Fall zu einem Ausfall der Stromversorgungseinrichtung führen.

In der DE 196 20 082 A1 ist ein Kabelverzweigerschrank mit einem Kabelverzweigergehäuse und einem Sockel beschrieben. Zur Vergrößerung der Aufnahmekapazität des Kabelverzweigergehäuses ist auf das Kabelverzweigergehäuse nach Abnehmen des Gehäusedachs ein Gehäuseaufsatz aufgesetzt. Der Gehäuseaufsatz ist mit dem Kabelverzweigergehäuse befestigt und das Gehäusedach mit dem Gehäuseaufsatz befestigt.

In der US 5 378 058 A und US 3 906 295 A sind elektrische Anschlusssockel beschrieben.

In der FR 2598563 ist eine Zapfsäule für Strom beschrieben.

Aufgabe der vorliegenden Erfindung ist es, eine Stromversorgungseinrichtung anzugeben, die es erlaubt, elektrische Komponenten als Übergabestelle zu einem Endverbraucher unabhängig von elektrischen Komponenten als Stromübergabestelle von einem Stromversorger zu installieren und hierbei eine hohe Funktionalität der Stromversorgungseinrichtung zu gewährleisten. Aufgabe ist es ferner, ein Verfahren anzugeben, das ein modulartiges Montieren einer Stromversorgungseinrichtung gestattet.

Die Erfindung schlägt eine Stromversorgungseinrichtung vor, die gemäß den Merkmalen des Patentanspruchs 1 ausgebildet ist. Sie weist ein stationär gelagertes, unteres Schrankmodul und ein oberhalb des unteren Schrankmoduls angeordnetes oberes Schrankmodul auf., In einem Innenraum des unteren Schrankmoduls ist eine trennbare Anschlussvorrichtung mit elektrischen Komponenten als Stromübergabestelle von einem Stromversorger angeordnet. In einem Innenraum des oberen Schrankmoduls sind elektrische Komponenten als Übergabestelle zu einem Endverbraucher angeordnet. Vom Innenraum des unteren Schrankmoduls zum Innenraum des oberen Schrankmoduls ist eine Stromverbindung der elektrischen Komponenten vom unteren Schrankmodul und oberen Schrankmodul geführt ist.

Vorzugsweise sind die elektrischen Komponenten als Übergabestelle zum Endverbraucher Komponenten einer Zapfsäule für Strom für elektrisch betriebene Kraftfahrzeuge. Die Stromversorgungseinrichtung wird insbesondere im Freien aufgebaut.

Von besonderem Vorteil ist bei der erfindungsgemäßen Stromversorgungseinrichtung, dass die Anordnung der beiden Schrankmodule übereinander erfolgt. Es wird zunächst das untere Schrankmodul, somit die trennbare Anschlussvorrichtung mit elektrischen Komponenten als Stromübergangsstelle von einem Stromversorger gesetzt. Aufgrund der Ausbildung der Anschlussvorrichtung kann diese elektrisch zum Stromnetz des Stromversorgers hin getrennt werden. Die Anschlussvorrichtung ist als schaltbare und/oder abgesicherte Anschlussvorrichtung ausgebildet. Bei der schaltbaren Anschlussvorrichtung ist demnach ein Trennen der Stromverbindung unter Last möglich. Die abgesicherte Anschlussvorrichtung ist überdies mittels Sicherungen absicherbar. Die Anschlussvorrichtung weist einen Anschlusskasten mit den elektrischen Komponenten auf und bildet ein Niederspannungs-Schaltgeräte-kombination.

Die trennbare Anschlussvorrichtung ist vorzugsweise als abgesicherter Anschlusskasten mit elektrischen Komponenten als Stromübergabestelle von dem Stromversorger gestaltet. Hierbei weist der Anschlusskasten insbesondere als elektrische Komponenten NH-Sicherungsunterteile zur Aufnahme von NH-Sicherungen und Anschlussklemmen zum Anschließen der einzelnen Stromphasen der Stromzugangs- und Stromabgangsleitung auf. Bei aus den NH-Sicherungensunterteilen herausgenommenen NH-Sicherungen ist die Anschlussvorrichtung getrennt.

Ist das untere Schrankmodul gesetzt und gegebenenfalls abgesichert und überdies gegebenenfalls verplombt, kann zu einem beliebigen, späteren Zeitpunkt das obere Schrankmodul montiert werden.

So kann der Stromversorger, quasi auf Vorrat unter dem Aspekt einer überschlägigen Bedarfsplanung, eine Vielzahl unterer Schrankmodule setzen, die erst später, im Sinne deren Funktionalität als Stromversorgungseinrichtung, mittels des oberen Schrankmoduls ergänzt werden. Hierzu ist nur erforderlich, das obere Schrankmodul oberhalb des unteren Schrankmoduls zu platzieren und vom Innenraum des unteren Schrankmoduls zum Innenraum des oberen Schrankmoduls die Stromverbindung der elektrischen Komponenten von unterem Schrankmodul und oberem Schrankmodul zu führen. Diese Anordnung vereinfacht überdies erheblich die Montage der elektrischen Komponente des oberen Schrankmoduls. So wird das obere Schrankmodul mit dessen elektrischen Komponenten vorzugsweise bereits im herstellenden Werk vorgefertigt, so dass die gesamte Einheit von oberem Schrankmodul und diesem zugeordneten elektrischen Komponenten nur noch mit dem unteren Schrankmodul und dessen elektrischen Komponenten mechanisch und elektrisch verbunden werden muss.

Grundsätzlich kann die Stromversorgungseinrichtung so gestaltet sein, dass das untere Schrankmodul oben offen ist und das obere Schrankmodul unten offen ist. Dies ermöglicht es besonders einfach die Stromverbindung der elektrischen Komponenten von unterem Schrankmodul und oberem Schrankmodul herzustellen. Es wird aber als besonders vorteilhaft angesehen, wenn der Innenraum des oberen Schrankmoduls gegenüber dem Innenraum des unteren Schrankmoduls abgedichtet ist, insbesondere der Innenraum des oberen Schrankmoduls insgesamt nach außen abgedichtet ist. Die Abdichtung des Innenraums des oberen Schrankmoduls gegenüber dem Innenraum des unteren Schrankmoduls hat den Vorteil, dass keine Feuchtigkeit vom einen zum anderen Schrankmodul gelangen kann. Ist der Innenraum des oberen Schrankmoduls insgesamt nach außen abgedichtet, kann keine Feuchtigkeit in das obere Schrankmodul gelangen. Dies ist von besonderer Bedeutung unter dem Aspekt der Funktionsanfälligkeit von elektronischen Bauteilen, die im Inneren des oberen Schrankmoduls angeordnet sind.

Das obere Schrankmodul weist vorzugsweise eine von außerhalb des Moduls zugängliche Steckdose auf und es ist im Innenraum des Moduls vorzugsweise ein Stromzähler angeordnet. Besonderes Anwendungsgebiet der Stromversorgungseinrichtung ist eine Zapfsäule für elektrisch betriebene Kraftfahrzeuge.

Es wird als vorteilhaft angesehen, wenn das obere Schrankmodul im unteren Schrankmodul gelagert ist, insbesondere mittelbar im unteren Schrankmodul gelagert ist. Grundsätzlich wäre es aber auch denkbar, die Lagerung des oberen Schrankmoduls oberhalb des unteren Schrankmoduls so zu verwirklichen, dass das obere Schrankmodul in gewissem vertikalen Abstand zum unteren Schrankmodul angeordnet ist und beispielsweise an einer Wand befestigt ist. Für den Fall, dass das obere Schrankmodul im unteren Schrankmodul mittelbar gelagert ist, wird es als besonders vorteilhaft angesehen, wenn zwischen dem oberen Schrankmodul und dem unteren Schrankmodul ein Distanzteil angeordnet ist, insbesondere ein Distanzteil mit abgedichteter Durchführung der Stromverbindung.

Gemäß einer bevorzugten Weiterbildung der Erfindung ist vorgesehen, dass das obere Schrankmodul oben offen ist und oben mittels eines Deckelteils verschließbar ist. Diese Gestaltung ist unter dem besonderen Aspekt zu sehen, dass bei zunächst erfolgender Montage nur des unteren Schrankmoduls dieses oben zumindest teilweise offene Schrankmodul mittels des Deckelteils verschlossen wird. Ist zu einem beliebigen späteren Zeitpunkt das obere Schrankmodul zu montieren und im unteren Schrankmodul zu lagern, wird das Deckelteil vom unteren Schrankmodul entfernt und zunächst das Distanzteil auf dem unteren Schrankmodul platziert und dann auf dem Distanzteil das obere Schrankmodul. Ist das obere Schrankmodul oben offen, wird dieses dann oben mittels des Deckelteils verschlossen. Somit kann dasselbe Deckelteil Verwendung finden, das zuvor dem Abdecken des unteren Schrankmoduls diente. Die auf die Kontaktkontur von Distanzteil und Deckelteil abgestimmten unteren und oberen Schrankmodule tragen somit zur Teilereduzierung der Stromversorgungseinrichtung bei.

Damit das Innere von unterem Schrankmodul und/oder oberem Schrankmodul einfach und zuverlässig zugänglich ist, sollte das untere Schrankmodul und/oder das obere Schrankmodul eine schwenkbare, insbesondere um eine vertikale Achse schwenkbare Tür oder eine steckbare Tür aufweisen. Die schwenkbare Tür ist unter dem Aspekt der Funktionalität von besonderem Vorteil, die steckbare Tür von besonderem Vorteil unter dem Aspekt der Minimierung der Herstellungskosten der Stromversorgungseinrichtung. Die Tür ist vorzugsweise abschließbar und/oder in geschlossener Stellung plombierbar. Hierdurch ist ein unbefugtes Manipulieren an den elektrischen Komponenten von unterem Schrankmodul bzw. oberem Schrankmodul zumindest erschwert.

Unter dem Aspekt der Gefahr einer Kondensatbildung, insbesondere im Bereich des Innenraumes des unteren Schrankmoduls ist von besonderem Vorteil, wenn Mittel zum Be- und Entlüften des vom unteren Schrankmoduls umschlossenen Raumes vorgesehen sind. Diese Mittel können auf unterschiedlichste Art und Weise gestaltet sein. So ist bei einer Gestaltung des unteren Schrankmoduls mit Tür beispielsweise möglich, die Be- und bzw. Entlüftungsöffnung durch eine fehlende Türdichtung zu bewerkstelligen, so dass Luft zwischen der Tür und dem Gehäuse des unteren Schrankmoduls hindurchtreten kann. Es ist ferner denkbar, im Gehäuse und/oder in der Tür Be- bzw. Entlüftungsschlitze vorzusehen.

Bevorzugt bestehen das untere Schrankmodul und/oder das obere Schrankmodul und/oder das Distanzteil und/oder das Deckelteil aus Kunststoff. Die Materialwahl des Kunststoffs besitzt den großen Vorteil, dass die genannten Komponenten wesentlich einfacher hergestellt werden können, als Komponenten aus Metall. Andererseits ist unter dem Aspekt der Wärmeleitung von Metall bei Auswahl des Werkstoffs Kunststoff die Gefahr einer Kondensatbildung deutlich reduziert.

Die Erfindung schlägt ferner ein besonderes Verfahren zum Montieren einer Stromversorgungseinrichtung vor, wobei dieses Verfahren bei einer Stromversorgungseinrichtung mit den vorstehend genannten Merkmalen Verwendung findet. Dieses Verfahren zeichnet sich durch folgende Schritte aus:
a. Stationäres Lagern eines unteren Schrankmoduls, das oben offen ist,
b. Lagern einer trennbaren Anschlussvorrichtung mit elektrischen Komponenten im unteren Schrankmodul, als Stromübergabestelle von einem Stromversorger,
c. Verschließen des unteren Schrankmoduls oben mittels eines Deckelteils,
d. Demontieren des Deckelteils,
e. Verbinden eines oberhalb des unteren Schrankmoduls angeordneten oberen Schrankmoduls mit dem unteren Schrankmodul, wobei zwischen den beiden Schrankmodulen ein Distanzteil angeordnet wird,
f. Lagern von elektrischen Komponenten im oberen Schrankmodul, als Übergabestelle zu dem Endverbraucher,
g. elektrisches Verbinden der elektrischen Komponenten des unteren Schrankmoduls mit den elektrischen Komponenten des oberen Schrankmoduls,
h. Verschließen des oberen Schrankmoduls oben mittels des Deckelteils.

Diese modulartige Montage der Stromversorgungseinrichtung ermöglicht es, zu nächst nur das untere Schrankmodul voll funktionsfähig zu installieren und erst später, zu einem beliebigen Zeitpunkt das obere Schrankmodul zu montieren, wobei es zunächst erforderlich ist, das Deckelteil, dass das untere Schrankmodul verschließt, zu demontieren.

Das erfindungsgemäße Verfahren ist nicht auf die beschriebene Reihenfolge der Untermerkmale a. bis h. beschränkt, sondern es ist nur erforderlich, dass zunächst die Verfahrensmerkmale a. bis c. in beliebiger Reihenfolge vollzogen werden und die Verfahrensmerkmale e. bis h. in beliebiger Reihenfolge vollzogen werden. Der Verfahrensschritt d. hat vor den Verfahrensschritt e. zu erfolgen.

Weitere Merkmale der Erfindung sind in den Unteransprüchen, der Beschreibung der Zeichnung sowie der Zeichnung selbst offenbart, wobei bemerkt wird, dass alle Merkmale und Einzelmerkmale erfindungswesentlich sind.

Die Erfindung wird anhand eines in der Zeichnung dargestellten, bevorzugten Ausführungsbeispieles näher erläutert. Es zeigt:
- Fig. 1: eine räumliche Ansicht im Wesentlichen des Frontbereiches der erfindungsgemäßen Stromversorgungseinrichtung, bei der es sich
- Fig. 2: um eine Stromzapfsäule für elektrisch betriebene Kraftfahrzeuge handelt, eine Ansicht der Zapfsäule gemäß Figur 1, bei geöffneten Türen zur Verdeutlichung der elektrischen Komponenten der Zapfsäule,
- Fig. 3: die Zapfsäule gemäß Figur 1, schräg von hinten gesehen,
- Fig. 3A: eine Detailansicht des in Figur 3 mit einer im Kreis gekennzeich- neten Bereiches der Zapfsäule,
- Fig. 4: eine Explosionsdarstellung der Zapfsäule,
- Fig. 4A: eine räumliche Ansicht eines bei aufgeklappter Deckelposition veranschaulichten Anschlusskastens,
- Fig. 5: eine räumliche Ansicht des unteren Schrankmoduls der Zapfsäule, vor dem Montieren des oberen Schrankmoduls der Zapfsäule,
- Fig. 6: das in Figur 5 gezeigte untere Schrankmodul bei geöffneter Tür,
- Fig. 7: das in Figur 5 gezeigte Unterschrankmodul schräg von hinten ge- sehen,
- Fig. 8: eine Explosionsdarstellung des in Figur 5 gezeigten unteren Schrankmoduls.

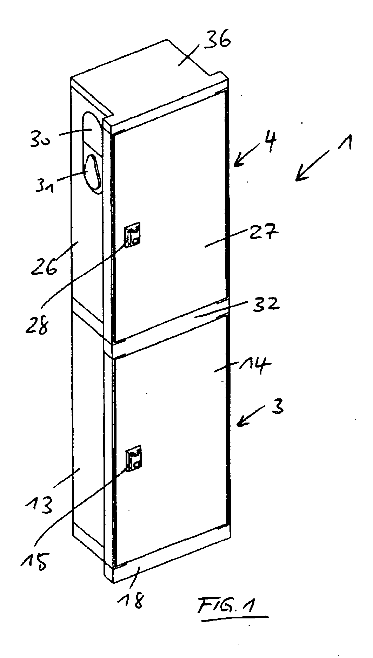

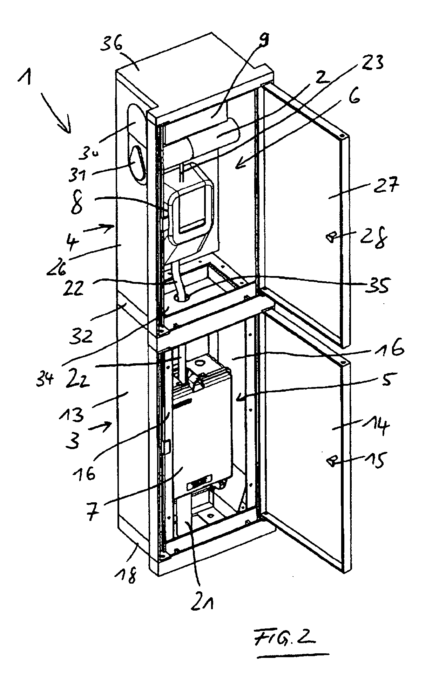

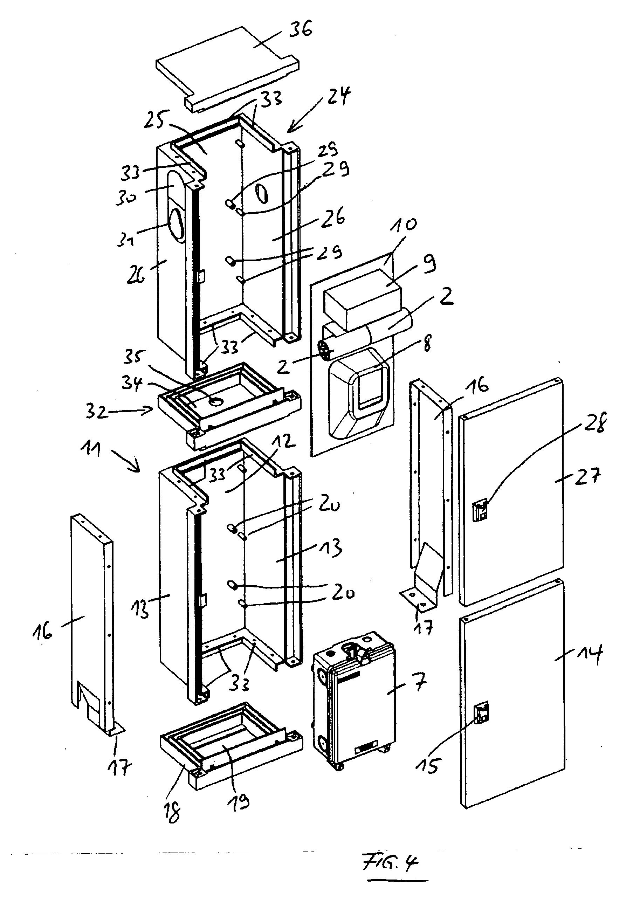

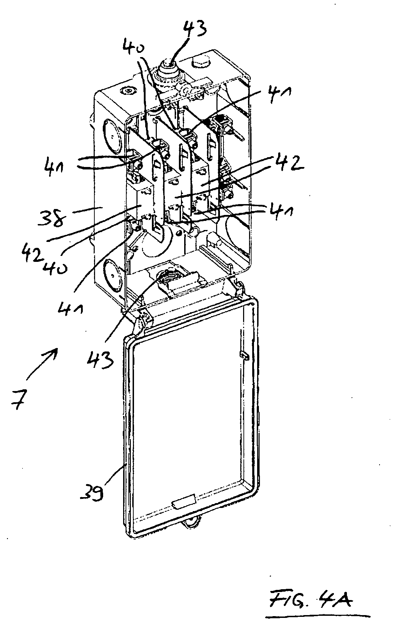

Bei der nachfolgenden Beschreibung wird zunächst auf die Darstellung der Figuren 1 bis 4A Bezug genommen, die die Stromzapfsäule 1 verdeutlichen, welche die Stromversorgungseinrichtung darstellt. Diese Zapfsäule 1 dient dem Entnehmen von Strom für elektrisch betriebene Kraftfahrzeuge, deren elektrisches Speicheraggregat mittels eines Stromladekabels mit einer Steckdose 2 der Zapfsäule 1 verbindbar ist.

Die Zapfsäule 1 weist ein stationär gelagertes, unteres Schrankmodul 3 und ein oberhalb des unteren Schrankmoduls 3 angeordnetes, oberes Schrankmodul 4 auf. Beide Schrankmodule 3 und 4 sind kastenförmig ausgebildet. Das untere Schrankmodul 3 weist einen Innenraum 5, das obere Schrankmodul 4 einen Innenraum 6 auf.

Im Innenraum 5 des unteren Schrankmoduls 3 ist eine Anschlussvorrichtung in Art eines Anschlusskastens 7 mit elektrischen Komponenten als Stromübergabestelle von einem Stromversorger angeordnet. Dieser Anschlusskasten 7 ist als üblicher Hausanschlusskasten gestaltet. Im Innenraum 6 des oberen Schrankmoduls 4 sind elektrische Komponenten als Übergabestelle zu einem Endverbraucher angeordnet. Bei diesen elektrischen Komponenten handelt es sich um einen Stromzähler 8, die Steckdose 2 und einen Klemmenblock 9, die elektrisch miteinander verbunden und an einer Montageplatte 10 befestigt sind.

Bei dem abgesicherten Anschlusskasten 7 mit dessen elektrischen Komponenten handelt es sich um eine Niederspannungs-Schaltgerätekombination in Kastenform. Konkret weist der Anschlusskasten 7 ein Gehäuse 38 sowie einen Deckel 39 zum Verschließen des Gehäuses 38 auf. Im kastenförmigen Gehäuse sind als wesentliche elektrische Komponenten NH-Sicherungsunterteile 40 mit Anschlussklemmen 41 und in die Sicherungsunterteile 40 einsteckbare NH-Sicherungen 42 angeordnet. Durch Entfernen der NH-Sicherungen 42 ist eine Trennung der elektrischen Stromzufuhr zum Anschlusskasten 7 möglich. Oben und unten sind im Gehäuse 38 Öffnungen 43 zum Durchführen von Stromversorgungskabeln zwecks elektrischem Anschließen des Anschlusskastens 7 im Bereich der Anschlussklemmen 41 für die einzelnen Stromphasen vorgesehen.

Das untere Schrankmodul 3 weist ein Gehäuse 11 mit Rückwand 12 und zwei Seitenwänden 13 auf. In der einen Seitenwand 13 ist eine Tür 14 um eine vertikale Achse schwenkbar gelagert und mittels eines Schlosses 15 mit der anderen Seitenwand verriegelbar. Im Inneren des unteren Schrankmoduls 3 sind in Anlage an den beiden Seitenwänden 13 Traggerüste 16 zum bodenseitigen Lagern des unteren Schrankmoduls 3 platziert, die mit den Seitenwänden 13 verbunden sind. Die Traggerüste 16 weisen in ihrem unteren Bereich Aufnahmen 17 auf, die mittels Schraubverbindungen mit einem Betonfundament im Erdboden verankerbar sind.

Unten weist das untere Schrankmodul 3 eine Bodenplatte 18 auf, mit der die Rückwand 12 und die Seitenwand 13 verbindbar sind. Die Bodenplatte 18 ist rahmenförmig ausgebildet, sie weist eine Durchtrittsöffnung 19 zum Fundament hin auf. Die Rückwand 12 ist auf ihrer, dem Innenraum 5 des unteren Schrankmoduls 3 zugewandten Seite mit diversen Aufnahmen 20 zum Anschrauben des Deckels 39 des Anschlusskastens 7 versehen. Vom Erdreich führt durch die Durchtrittsöffnung 19 und die untere Öffnung 43 des Gehäuses 38 ein Stromversorgungskabel 21 des Stromversorgers zu den elektrischen Komponenten im Anschlusskasten 7. Konkret sind die Einzelkabel des Stromversorgungskabels 21 mit den unteren Anschlussklemmen 41 des Anschlusskastens 7 verbunden. Von diesem führt nach oben weg, aus dem Anschlusskasten 7 heraus, ein Stromversorgungskabel 22 zum Innenraum 6 des oberen Schrankmoduls 4. Im Detail sind die Einzelkabel des Stromversorgungskabels 22 mit den oberen Anschlussklemmen 41 des Anschlusskasten 7 verbunden. Das Stromversorgungskabel 22 ist mit dem Stromzähler 8 elektrisch verbunden. Von dort erfolgt die elektrische Verbindung von Klemmblock 9 und Steckdose 2, veranschaulicht durch das weitere Stromversorgungskabel 23.

Das obere Schrankmodul 4 ist weitreichend entsprechend dem unteren Schrankmodul 3 ausgebildet und weist ein Gehäuse 24 mit Rückwand 25 und zwei Seitenwänden 26 auf, ferner eine Tür 27 mit Schloss 28, die mit den Seitenwänden 26 zusammenwirken. Die Rückwand 25 ist entsprechend den Aufnahmen 20 mit Aufnahmen 29 zum Anschrauben der Montageplatte 10 versehen. Im Unterschied zu den Seitenwänden 13 weisen die Seitenwände 26 von außen mittels eines Schiebers 30 verschließbare Öffnungen 31 auf, die bündig mit den diametral angeordneten Enden der als Doppelstecker ausgebildeten Steckdose 2 abschließen.

Zwischen dem Gehäuse 11 des unteren Schrankmoduls 3 und dem Gehäuse 24 des oberen Schrankmoduls 4 ist ein als mittlere Trennplatte 32 ausgebildetes Distanzteil angeordnet. Das Gehäuse 11 ist oben und das Gehäuse 24 unten mit U-förmig angeordneten Profilleisten 23 versehen, die Löcher für Schrauben zum Verschrauben der beiden Gehäuse 11 und 24 aufweisen, wobei diese zwischen sich die Trennplatte 32 klemmen.

Die Trennplatte 32 weist einen Bodenabschnitt 34 auf, mit einem mittleren Loch 35 zum abgedichteten Durchführen des Stromversorgungskabels 22 vom unteren Schrankmodul 3 zum oberen Schrankmodul 4.

Das untere Schrankmodul 4 weist im Bereich des oberen Endes des Gehäuse 24 eine entsprechende U-förmige Profilleiste 33 auf, mit Durchgangslöchern zum Verbinden des Gehäuses 24 mittels Schrauben mit einer Dachplatte 36.

Die Tür 27 ist in geschlossener Stellung bezüglich der beiden Seitenwände 26, der Tragplatte 32 und der Dachplatte 36 abgedichtet, insbesondere durch Verwendung von Dichtgummis, die in der Tür 27 gelagert sind, so dass, da auch die Durchführung des Stromversorgungskabels 22 durch den Bodenabschnitt 34 der Tragplatte 32 abgedichtet ist, der Innenraum 6 des oberen Schrankmoduls 4 insgesamt abgedichtet ist. Diese Abdichtung des Innenraums ist unter dem besonderen Aspekt der Funktionalität der elektronischen Einzelkomponenten der elektrischen Komponenten im oberen Schrankmodul 4 zu sehen, die in hohem Maße störungsanfällig bezüglich erhöhter Feuchtigkeit sind.

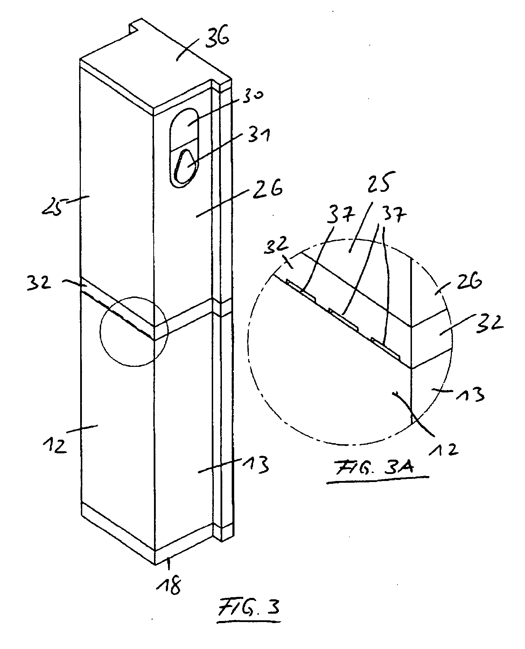

Da das untere Schrankmodul 4 den Anschlusskasten 7 aufnimmt, der in Verbindung mit dem Erdreich steht, ist es wichtig, Maßnahmen zu treffen, die einer Befeuchtung des Innenraums 5 des unteren Schrankmoduls 3 entgegenwirken. Aus diesem Grund ist, wie der Darstellung der Figuren 3 und 3a zu entnehmen ist, die mittlere Tragplatte 32 in deren der Rückwand 12 des Gehäuses 11 zugewandtem Bereich auf der Unterseite der Tragplatte 32 mit Nuten versehen, so dass sich Lüftungsschlitze 37 zwischen Tragplatte 32 und Rückwand 12 ergeben. Die Tür 14 des unteren Schrankmoduls 3 weist keine Dichtelemente auf, so dass Luft durch den Türschlitz und die Lüftungsschlitze 37 und damit durch den Innenraum 5 des unteren Schrankmoduls 3 zirkulieren kann.

Das untere Schrankmodul 3, das obere Schrankmodul 4, einschließlich der Türen 14 und 27 sowie die Bodenplatte 18, die Trennplatte 32 und die Dachplatte 36 bestehen aus Kunststoff. Auch die anderen Bauteile der Zapfsäule 1, die nicht leitende Komponenten betreffen, sind vorzugsweise aus Kunststoff ausgeführt.

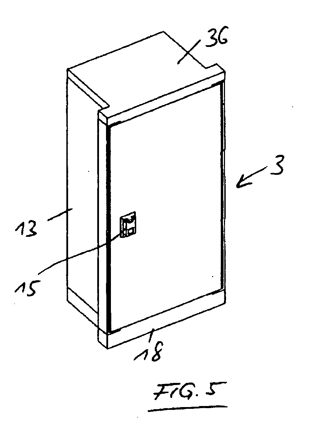

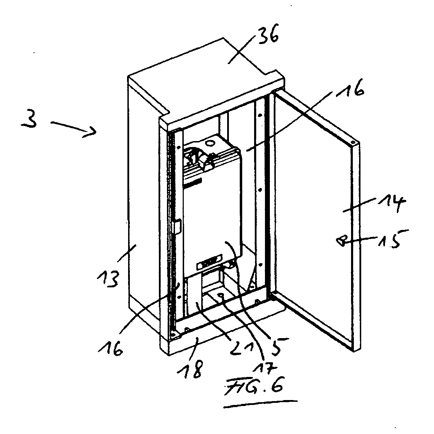

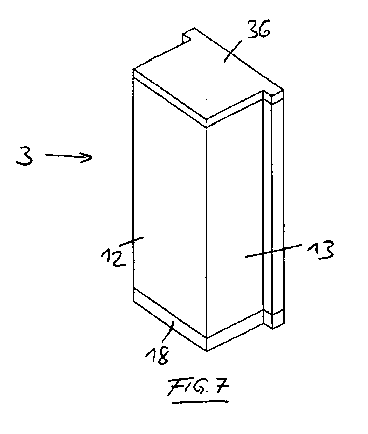

Die insoweit beschriebene erfindungsgemäße Zapfsäule 1 zeichnet sich durch den modularen Aufbau aufgrund des unteren Schrankmoduls 3 und des oberen Schrankmoduls 4 aus. Dieser modulare Aufbau gestattet es, das vorinstallierte untere Schrankmodul 3 zu einem beliebigen Zeitpunkt um das obere Schrankmodul 4 und dessen jeweilige elektrische Komponenten zu ergänzen. Hierfür ist es nur erforderlich, am bestehenden unteren Schrankmodul 3 die Dachplatte 36, die bei diesem Montagezustand das untere Schrankmodul 6 abdeckt, zu entfernen und dann den weiteren Aufbau fortzusetzen, um die Zapfsäule 1 zu schaffen. Dies ist in den Figuren 5 bis 8 näher veranschaulicht:

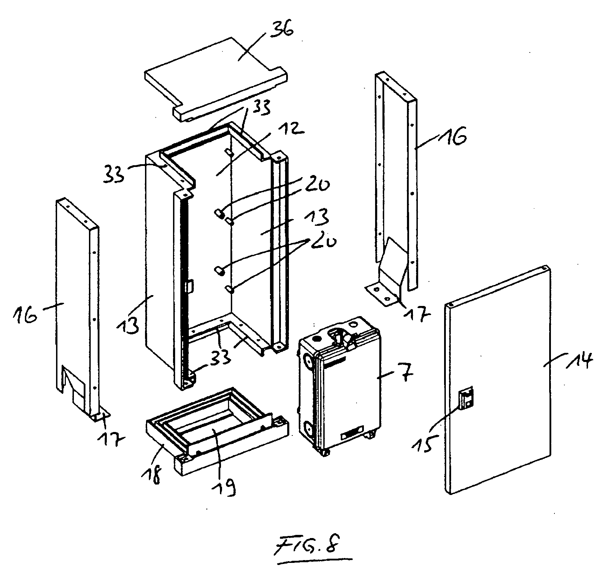

Aus diesen Figuren ergibt sich der Aufbau des unteren Schrankmoduls 3, das oben mittels der Dachplatte 36 abgedeckt ist. Der Anschlusskasten 7 ist im unteren Schrankmodul 3 montiert, wobei die Stromzuführung im Anschlusskasten 7 endet, somit nur das Stromversorgungskabel 21 angeschlossen ist, nicht aber das vom Anschlusskasten 7 abgehende Stromversorgungskabel 22. Diese Situation ergibt sich nach dem Setzen des Anschlusskastens. Soll zu einem späteren Zeitpunkt, beispielsweise Wochen oder Monate später, diese in den Figuren 5 bis 8 gezeigte Funktionseinheit um das eigentliche Zapfsäulenmodul erweitert werden, wird die in Figur 8 gezeigte Dachplatte 36 demontiert und vorzugsweise das bereits fabrikmäßig vorgefertigte obere Schrankmodul 4 bei Zwischenanordnung der mittleren Platte 32 mit dem unteren Schrankmodul 3 verbunden. Das vorfabrizierte obere Schrankmodul 4 nimmt demnach bereits die Montageplatte 10 mit Steckdose 2, Stromzähler 8 und Klemmblock 9 auf und ist überdies mit der Tür 27 versehen. Es ist dann nur noch erforderlich, die Dachplatte 36, die bisher mit dem Gehäuse 11 verbunden war, nunmehr mit dem Gehäuse 24 zu verbinden. Nach dem elektrischen Anschließen des oberen Schrankmoduls 4, somit dem Verbinden von Anschlusskasten und Stromzähler 8 mittels des Stromversorgungskabels 22 ist die Zapfsäule 1 funktionsfähig.

Die beschriebene Zapfsäule 1 ist durch wenige, im Weitesten standardisierte Einzelkomponenten herstellbar und es können die Module zeitlich unabhängig aufgestellt werden.

### Bezugszeichenliste

- 1: Stromzapfsäule
- 2: Steckdose
- 3: unteres Schrankmodul
- 4: oberes Schrankmodul
- 5: Innenraum unteres Schrankmodul
- 6: Innenraum oberes Schrankmodul
- 7: Anschlusskasten
- 8: Stromzähler
- 9: Klemmblock
- 10: Montageplatte
- 11: Gehäuse
- 12: Rückwand
- 13: Seitenwand
- 14: Tür
- 15: Schloss
- 16: Traggerüst
- 17: Aufnahme
- 18: Bodenplatte
- 19: Durchtrittsöffnung
- 20: Aufnahme
- 21: Stromversorgungskabel
- 22: Stromversorgungskabel
- 23: Stromversorgungskabel
- 24: Gehäuse
- 25: Rückwand
- 26: Seitenwand
- 27: Tür
- 28: Schloss
- 29: Aufnahme
- 30: Schieber
- 31: Öffnung
- 32: mittlere Tragplatte
- 33: Profilleiste
- 34: Bodenabschnitt
- 35: Loch
- 36: Dachplatte
- 37: Lüftungsschlitz
- 38: Gehäuse
- 39: Deckel
- 40: NH-Sicherungsunterteil
- 41: Anschlussklemme
- 42: NH-Sicherung
- 43: Öffnung

## Patentansprüche

1. Stromversorgungseinrichtung (1), mit einem stationär gelagerten, unteren Schrankmodul (3) und mit einem oberhalb des unteren Schrankmoduls (3) angeordneten, oberen Schrankmodul (4), wobei in einem Innenraum (5) des unteren Schrankmoduls (3) eine trennbare Anschlussvorrichtung (7) mit elektrischen Komponenten (40, 41, 42) als Stromübergabestelle von einem Stromversorger angeordnet ist und in einem Innenraum (6) des oberen Schrankmoduls (4) elektrische Komponenten (2, 8, 9) als Übergabestelle zu einem Endverbraucher angeordnet sind, wobei vom Innenraum (5) des unteren Schrankmoduls (3) zum Innenraum (6) des oberen Schrankmoduls (4) eine Stromverbindung (22) der elektrischen Komponenten von unterem Schrankmodul (3) und oberem Schrankmodul (4) geführt ist, wobei die Anschlussvorrichtung (7) als schaltbare und/oder abgesicherte Anschlussvorrichtung (7) ausgebildet ist, wobei die Anschlussvorrichtung (7) einen Anschlusskasten mit den elektrischen Komponenten (40, 41, 42) aufweist und eine Niederspannungs-Schaltgerätekombination bildet, sowie die elektrischen Komponenten (2, 8, 9) der Übergabestelle zum Endverbraucher Komponenten einer Zapfsäule (1) für Strom sind.

2. Einrichtung nach Anspruch 1, wobei die elektrischen Komponenten (2, 8, 9) der Übergabestelle zum Endverbraucher Komponenten einer Zapfsäulie (1) für Strom für elektrisch betriebene Kraftfahrzeuge sind.

3. Einrichtung nach Anspruch 1 oder 2, wobei das untere Schrankmodul (3) oben offen ist und das obere Schrankmodul (4) unten offen ist.

4. Einrichtung nach einem der Ansprüche 1 bis 3, wobei der Innenraum (6) des oberen Schrankmoduls (4) gegenüber dem Innenraum (5) des unteren Schrankmoduls (3) abgedichtet ist, insbesondere der Innenraum (5) des oberen Schrankmoduls (4) insgesamt nach außen abgedichtet ist.

5. Einrichtung nach einem der Ansprüche 1 bis 4, wobei das obere Schrankmodul (4) eine von außerhalb dieses Moduls (4) zugängliche Steckdose (2) aufweist, sowie im Innenraum (6) dieses Moduls (4) ein Stromzähler (8) angeordnet ist.

6. Einrichtung nach einem der Ansprüche 1 bis 5, wobei das obere Schrankmodul (4) im unteren Schrankmodul (3) gelagert ist, insbesondere mittelbar im unteren Schrankmodul (3) gelagert ist.

7. Einrichtung nach Anspruch 6, wobei zwischen dem oberen Schrankmodul (4) und dem unteren Schrankmodul (3) ein Distanzteil (32) angeordnet ist, insbesondere ein Distanzteil (32) mit abgedichteter Durchführung der Stromverbindung (22) angeordnet ist.

8. Einrichtung nach einem der Ansprüche 1 bis 7, wobei das obere Schrankmodul (4) oben offen ist und oben mittels eines Deckelteils (36) verschließbar ist.

9. Einrichtung nach Anspruch 8, wobei bei vom unteren Schrankmodul (3) demontiertem oberen Schrankmodul (4) das untere Schrankmodul (3) oben mittels des Deckelteils (36) verschließbar ist.

10. Einrichtung nach einem der Ansprüche 1 bis 9, wobei das untere Schrankmodul (3) und/oder das obere Schrankmodul (4) eine schwenkbare, insbesondere um eine vertikale Achse schwenkbare oder eine steckbare Tür (14, 27) aufweist.

11. Einrichtung nach Anspruch 10, wobei die Tür (14, 27) abschließbar und/oder in geschlossener Stellung plombierbar ist.

12. Einrichtung nach einem der Ansprüche 1 bis 11, wobei das untere Schrankmodul (3) und/oder das obere Schrankmodul (4) und/oder das Distanzteil (32) und/oder das Deckelteil (36) aus Kunststoff bestehen.

13. Einrichtung nach einem der Ansprüche 1 bis 12, wobei Mittel (37) zum Be- und Entlüften des vom unteren Schrankmodul (3) umschlossenen Raumes (5) vorgesehen sind.

14. Verfahren zum Montieren einer Stromversorgungseinrichtung (1) nach einem der Ansprüche 1 bis 13, mit folgenden Merkmalen:
a. Stationäres Lagern eines unteren Schrankmoduls (3), das oben offen ist,
b. Lagern einer trennbaren Anschlussvorrichtung (7) mit elektrischen Komponenten (40, 41, 42) im unteren Schrankmodul (3), als Stromübergabestelle von einem Stromversorger,
c. Verschließen des unteren Schrankmoduls (3) oben mittels eines Deckelteils (36),
d. Demontieren des Deckelteils (36),
e. Verbinden eines oberhalb des unteren Schrankmoduls (3) angeordneten oberen Schrankmoduls (4) mit dem unteren Schrankmodul (3), wobei zwischen den beiden Schrankmodulen (3, 4) ein Distanzteil (32) angeordnet wird,
f. Lagern von elektrischen Komponenten (2, 8, 9) im oberen Schrankmodul (4), als Übergabestelle zu dem Endverbraucher,
g. elektrisches Verbinden der elektrischen Komponenten des unteren Schrankmoduls (3) mit den elektrischen Komponenten (2, 8, 9) des oberen Schrankmoduls (4),
h. Verschließen des oberen Schrankmoduls (4) oben mittels des Deckelteils (36).

## Claims

1. Power supply device (1), having a lower cabinet module (3) which is mounted in a stationary manner, and having an upper cabinet module (4) which is arranged above the lower cabinet module (3), wherein a connection apparatus (7) which can be disconnected and has electrical components (40, 41, 42) is arranged in an interior space (5) in the lower cabinet module (3) as a power transfer point from a power supply means, and electrical components (2, 8, 9) are arranged in an interior space (6) in the upper cabinet module (4) as a transfer point to an end user, wherein a power connection (22) of the electrical components from the lower cabinet module (3) and the upper cabinet module (4) is routed from the interior space (5) in the lower cabinet module (3) to the interior space (6) in the upper cabinet module (4), wherein the connection apparatus (7) is in the form of a switchable and/or secured connection apparatus (7), wherein the connection apparatus (7) has a connection box containing the electrical components (40, 41, 42) and forms a low-voltage switchgear combination, and the electrical components (2, 8, 9) of the transfer point to the end user are components of a charge station (1) for power.

2. Device according to Claim 1, wherein the electrical components (2, 8, 9) of the transfer point to the end user are components of a charge station (1) for power for electrically operated motor vehicles.

3. Device according to Claim 1 or 2, wherein the lower cabinet module (3) is open at the top and the upper cabinet module (4) is open at the bottom.

4. Device according to one of Claims 1 to 3, wherein the interior space (6) in the upper cabinet module (4) is sealed off from the interior space (5) in the lower cabinet module (3), in particular the interior space (6) in the upper cabinet module (4) is sealed off from the outside entirely.

5. Device according to one of Claims 1 to 4, wherein the upper cabinet module (4) has a plug receptacle (2) which is accessible from outside this module (4), and an electricity meter (8) is arranged in the interior space (6) in this module (4).

6. Device according to one of Claims 1 to 5, wherein the upper cabinet module (4) is mounted in the lower cabinet module (3), in particular mounted indirectly in the lower cabinet module (3).

7. Device according to Claim 6, wherein a spacer (32) is arranged between the upper cabinet module (4) and the lower cabinet module (3), in particular a spacer (32) with sealed-off lead-through of the power connection (22) is arranged.

8. Device according to one of Claims 1 to 7, wherein the upper cabinet module (4) is open at the top and can be closed at the top by means of a cover part (36).

9. Device according to Claim 8, wherein the lower cabinet module (3) can be closed at the top by means of the cover part (36) when the upper cabinet module (4) has been removed from the lower cabinet module (3).

10. Device according to one of Claims 1 to 9, wherein the lower cabinet module (3) and/or the upper cabinet module (4) have/has a door (14, 27) which can be pivoted, in particular can be pivoted about a vertical axis, or can be interlocked.

11. Device according to Claim 10, wherein the door (14, 27) can be locked and/or can be sealed in the closed position.

12. Device according to one of Claims 1 to 11, wherein the lower cabinet module (3) and/or the upper cabinet module (4) and/or the spacer (32) and/or the cover part (36) are composed of plastic.

13. Device according to one of Claims 1 to 12, wherein means (37) for ventilating and venting the space (5) enclosed by the lower cabinet module (3) are provided.

14. Method for assembling a power supply device (1) according to one of Claims 1 to 3, having the following features:
a. mounting a lower cabinet module (3), which is open at the top, in a stationary manner,
b. mounting a connection apparatus (7) which can be disconnected and has electrical components (40, 41, 42) in the lower cabinet module (3) as a power transfer point from a power supply means,
c. closing the lower cabinet module (3) at the top by means of a cover part (36),
d. removing the cover part (36),
e. connecting an upper cabinet module (4), which is arranged above the lower cabinet module (3), to the lower cabinet module (3), wherein a spacer (32) is arranged between the two cabinet modules (3, 4),
f. mounting electrical components (2, 8, 9) in the upper cabinet module (4) as a transfer point to the end user,
g. electrically connecting the electrical components of the lower cabinet module (3) to the electrical components (2, 8, 9) of the upper cabinet module (4),
h. closing the upper cabinet module (4) at the top by means of the cover part (36).

## Revendications

1. Dispositif (1) d'alimentation en courant présentant un module inférieur d'armoire (3) monté en position stationnaire et un module supérieur d'armoire (4) disposé au-dessus du module inférieur d'armoire (3),
un dispositif séparable de raccordement (7) présentant des composants électriques (40, 41, 42) qui servent d'emplacements de transfert de courant depuis un dispositif d'alimentation en courant étant disposé dans un espace intérieur (5) du module inférieur d'armoire (3) et des composants électriques (2, 8, 9) servant d'emplacements de transfert vers un consommateur final étant disposés dans un espace intérieur (6) du module supérieur d'armoire (4),
une liaison de courant (22) des composants électriques du module intérieur d'armoire (3) et du module supérieur d'armoire (4) étant réalisée entre l'espace intérieur (5) du module inférieur d'armoire (3) et l'espace intérieur (6) du module supérieur d'armoire (4),
le dispositif de raccordement (7) étant configuré comme dispositif de raccordement (7) commutable et/ou protégé,
le dispositif de raccordement (7) présentant un boîtier de raccordement avec les composants électriques (40, 41, 42) et formant une combinaison d'appareils de commutation à basse tension, les composants électriques (2, 8, 9) de l'emplacement de transfert vers le consommateur final étant des composants d'un distributeur (1) de courant.

2. Dispositif selon la revendication 1, dans lequel les composants électriques (2, 8, 9) de l'emplacement de transfert vers le consommateur final sont des composants d'un distributeur (1) de courant pour véhicules automobiles alimentés à l'électricité.

3. Dispositif selon les revendications 1 ou 2, dans lequel le module inférieur d'armoire (3) est ouvert dans le haut et le module supérieur d'armoire (4) est ouvert dans le bas.

4. Dispositif selon l'une des revendications 1 à 3, dans lequel l'espace intérieur (6) du module supérieur d'armoire (4) est séparé hermétiquement de l'espace intérieur (5) du module inférieur d'armoire (3) et en ce qu'en particulier l'espace intérieur (6) du module supérieur d'armoire (4) est séparé globalement et hermétiquement de l'extérieur.

5. Dispositif selon l'une des revendications 1 à 4, dans lequel le module supérieur d'armoire (4) présente une prise de courant (2) accessible depuis l'extérieur de ce module (4) et en ce qu'un compteur de courant (8) est disposé dans l'espace intérieur (6) de ce module (4).

6. Dispositif selon l'une des revendications 1 à 5, dans lequel le module supérieur d'armoire (4) est monté dans le module inférieur d'armoire (3) et en particulier indirectement dans le module inférieur d'armoire (3).

7. Dispositif selon la revendication 6, dans lequel une pièce d'écartement (32), en particulier une pièce d'écartement (32) dotée d'un passage hermétique pour la liaison de courant (22), est disposée entre le module supérieur d'armoire (4) et le module inférieur d'armoire (3).

8. Dispositif selon l'une des revendications 1 à 7, dans lequel le module supérieur d'armoire (4) est ouvert dans le haut et peut être fermé dans le haut au moyen d'une partie de couvercle (36).

9. Dispositif selon la revendication 8, dans lequel, lorsque le module supérieur d'armoire (4) est démonté du module inférieur d'armoire (3), le module inférieur d'armoire (3) peut être fermé dans le haut au moyen de la partie de couvercle (36).

10. Dispositif selon l'une des revendications 1 à 9, dans lequel le module inférieur d'armoire (3) et/ou le module supérieur d'armoire (4) présentent une porte pivotante, en particulier apte à pivoter autour d'un axe vertical, ou une porte enfichable (14, 27).

11. Dispositif selon la revendication 10, dans lequel la porte (14, 27) peut être fermée et/ou plombée en position fermée.

12. Dispositif selon l'une des revendications 1 à 11, dans lequel le module inférieur d'armoire (3), le module supérieur d'armoire (4), la pièce d'écartement (32) et/ou la partie de couvercle (36) sont réalisés en matière synthétique.

13. Dispositif selon l'une des revendications 1 à 12, dans lequel des moyens (37) de ventilation et d'évent de l'espace (5) englobé par le module inférieur d'armoire (3) sont prévus.

14. Procédé de montage d'un dispositif (1) d'alimentation en courant selon l'une des revendications 1 à 13, le procédé présentant les caractéristiques suivantes :
a. montage en position stationnaire d'un module inférieur d'armoire (3) ouvert dans le haut,
b. montage d'un dispositif séparable de raccordement (7) doté de composants électriques (40, 41, 42) dans le module inférieur d'armoire (3), en tant qu'emplacement de transfert de courant depuis un dispositif d'alimentation en courant,
c. fermeture du module inférieur d'armoire (3) dans le haut au moyen d'une partie de couvercle (36),
d. démontage de la partie de couvercle (36),
e. raccordement d'un module supérieur d'armoire (4) disposé au-dessus du module inférieur d'armoire (3) avec le module inférieur d'armoire (3), une pièce d'écartement (32) étant disposée entre les deux modules d'armoire (3, 4),
f. montage de composants électriques (2, 8, 9) dans la partie supérieure d'armoire (4) en tant qu'emplacement de transfert vers un consommateur final,
g. raccordement électrique des composants électriques du module inférieur d'armoire (3) avec les composants électriques (2, 8, 9) du module supérieur d'armoire (4) et
h. fermeture du module supérieur d'armoire (4) dans le haut au moyen de la partie de couvercle (36).
